# DEMANDE DE BREVET EUROPEEN

(11) **EP 1 672 831 A1**
(43) Date de publication de la demande: **21.06.2006**
(21) Numéro de dépôt: 04106646.5
(22) Date de dépôt: 16.12.2004
(51) Int. Cl.: H04L 9/08, H04N 7/167, H04N 7/16

(54) **Méthode de transmission de données numériques dans un réseau local**

(71) Demandeur: Nagravision S.A., 1033 Cheseaux-sur-Lausanne (CH)
(72) Inventeur: MOREILLON, Guy, 1042, Bioley-Orjulaz (CH)
(74) Mandataire: Wenger, Joel-Théophile

(57) **Abrégé**

Le but de la présente invention est d'une part, de permettre une lecture d'un contenu stocké par un enregistreur vidéo numérique depuis un décodeur du réseau local quel que soit le temps écoulé entre le stockage et la lecture, et d'autre part d'empêcher le transfert ou la copie abusif du contenu stocké d'un réseau à un autre.

Ce but est atteint par une méthode transmission de données numériques dans un réseau local comprenant des membres constitués par au moins une première unité multimédia disposant de moyens de stockage de contenus (C) connecté à un serveur de diffusion (SD) de donées audio/vidéo (D) numériques encryptées et à au moins une seconde unité multimédia destinée à restituer le contenu (C), chaque membre possédant un module de sécurité (SM1,SM2,SM3) incluant une clé de réseau (Kr), ladite méthode est caractérisée en ce qu'elle comprend les étapes suivantes:
- réception et décryption par la première unité multimédia de données encryptées formant un contenu (C) diffusé par le serveur de diffusion (SD),
- re-encryption du contenu (C) préalablement décrypté au moyen d'une clé aléatoire (Ka),
- transmission du contenu re-encrypté Ka(C) accompagné par un bloc d'autorisation Kr(Ka) comprenant la clé aléatoire (Ka) encryptée avec la clé de réseau (Kr) à la seconde unité multimédia,
- décryption par la seconde unité multimédia du bloc d'autorisation Kr(Ka), extraction de la clé aléatoire (Ka) et décryption du contenu (C) avec ladite clé aléatoire (Ka).

## Description

### Domaine de l'invention

La présente invention concerne une méthode de transmission de données numériques d'un contenu audio/vidéo dans un réseau local. Plus particulièrement, la méthode de l'invention s'applique à un ou plusieurs réseaux domestiques d'appareils multimédia.

### Arrière plan technique

Un réseau domestique numérique est un ensemble d'appareils audio-visuels reliés par des interfaces numériques de communication. Ces appareils incluent par exemple des décodeurs de télévision numérique, lecteurs / enregistreurs de disques optiques, enregistreurs vidéo munis de disques durs, ordinateurs ou autres plateformes permettant l'accès à un contenu audio/vidéo payant diffusé. Le réseau domestique appartient à un abonné à des programmes de télévision numérique prédéfinis par exemple et chaque appareil du réseau peut accéder uniquement au contenu de ces programmes. L'accès est géré par un module de sécurité inséré dans chaque appareil du réseau. Ce module, par exemple sous la forme d'une carte à puce, contient des données propres à l'abonné consistant en des droits d'accès aux programmes. Il permet aussi une identification de chaque appareil connecté sur le réseau domestique et le décodage des données.

Selon une configuration particulière le réseau domestique comprend un enregistreur de données audio/vidéo connecté d'une part à un serveur de diffusion et d'autre part à une pluralité de décodeurs ou "set-top-box". Un contenu audio/vidéo crypté est diffusé par le serveur pour être soit décrypté par un ou plusieurs décodeurs pour la visualisation directe, soit stocké dans une mémoire de masse de l'enregistreur consistant en général en un disque dur. Chaque décodeur peut extraire tout ou partie de ce contenu stocké pour une visualisation à un moment choisi par l'utilisateur.

Une solution consiste à enregistrer les données du flux entrant sous leur forme brute et chaque décodeur du réseau lit et décrypte ces données au moyen des mots de contrôle CW extraits des messages de contrôle ECM. La décryption des données dépend en outre des droits contenus dans le module de sécurité associé à chaque décodeur et qui sont obtenus au moyen de messages d'administration EMM.

L'inconvénient majeur de cette solution est que des données stockées depuis un certain temps ne peuvent plus être décryptées par les décodeurs du réseau car les droits contenus dans les modules de sécurité ne sont plus valides. En effet, lorsqu'un flux est visualisé en direct sans stockage intermédiaire, les mots de contrôle CW concordent avec les droits régulièrement mis à jour à l'aide des messages d'administration EMM. Par contre, les droits des messages EMM récemment mis à jour dans le module de sécurité lors de la visualisation en direct ne peuvent plus permettre la visualisation d'un contenu dont les messages ECM incluent des anciens mots de contrôle.

### Description sommaire de l'invention

Le but de la présente invention est d'une part, de permettre une lecture d'un contenu stocké par un enregistreur vidéo numérique depuis un décodeur du réseau local quel que soit le temps écoulé entre le stockage et la lecture, et d'autre part d'empêcher le transfert ou la copie abusif du contenu stocké d'un réseau à un autre.

Ce but est atteint par une méthode transmission de données numériques dans un réseau local comprenant des membres constitués par au moins une première unité multimédia disposant de moyens de stockage de contenus connecté à un serveur de diffusion de données audio/vidéo numériques encryptées et à au moins une seconde unité multimédia destinée à restituer le contenu, chaque membre possédant un module de sécurité incluant une clé de réseau, ladite méthode est caractérisée en ce qu'elle comprend les étapes suivantes:
- réception et décryption par la première unité multimédia de données encryptées formant un contenu diffusé par le serveur de diffusion,
- re-encryption du contenu préalablement décrypté au moyen d'une clé aléatoire,
- transmission du contenu re-encrypté accompagné par un bloc d'autorisation comprenant la clé aléatoire encryptée avec la clé de réseau à la seconde unité multimédia,
- décryption par la seconde unité multimédia du bloc d'autorisation, extraction de la clé aléatoire et décryption du contenu avec ladite clé aléatoire.

La première unité multimédia est ici par exemple un enregistreur de données audio/vidéo numériques connecté au serveur de diffusion. La seconde unité multimédia connectée à l'enregistreur peut consister en un décodeur ou "set-top-box" de télévision numérique. Le contenu diffusé est décrypté par l'enregistreur au moyen des mots de contrôle issu des messages de contrôle en fonction des droits contenus dans le module de sécurité. Ensuite, le contenu décrypté est re-encrypté avec une clé aléatoire générée par le module de sécurité avant son stockage sur le disque dur par exemple de l'enregistreur.

De plus chaque membre du réseau local possède une clé propre audit réseau. Le contenu stocké et encrypté avec la clé aléatoire est transmis à un ou plusieurs décodeurs membre du réseau avec un bloc d'autorisation. Ce bloc est constitué d'un cryptogramme formé au moins par la clé aléatoire encryptée avec la clé de réseau. Chaque membre du réseau partageant la même clé de réseau, peut extraire la clé aléatoire du cryptogramme permettant de décrypter le contenu.

Ainsi grâce aux étapes de décryption et de re-encryption exécutées avant le stockage, le contenu devient accessible aux membres du réseau indépendamment du décalage temporel qui peut se présenter entre un mot de contrôle et des droits dans le module de sécurité.

De plus, l'avantage d'un tel système est que le contenu circule sous forme encryptée dans le réseau jusqu'à ce qu'il soit lu. La décryption du contenu est réalisée sous le contrôle du module de sécurité possédant la clé de réseau. Une copie de ce contenu ne pourra donc pas être décryptée par un décodeur appartenant à un autre réseau local. Un décodeur "étranger" connecté au réseau ne peut pas non plus décrypter le contenu du fait qu'il ne possède pas la clé de réseau adéquate dans son module de sécurité.

Selon une variante de configuration, le réseau local est composé de sous-réseaux domestiques ayant chacun une clé propre. Ce type de configuration peut se présenter dans un quartier ou un immeuble d'habitation où chaque ménage, constituant un sous-réseau, possède au moins un enregistreur auquel sont connectés des décodeurs. Le serveur de diffusion gère les différents sous-réseaux et comprend en outre un serveur de licence possédant les clés de chaque sous-réseau.

La présente invention décrit également une méthode transmission de données numériques dans un réseau local comprenant au moins un membre constitué par un sous-réseau comprenant au moins une première unité multimédia disposant de moyens de stockage de contenus connectée à au moins une seconde unité multimédia destinée à restituer le contenu, ledit sous-réseau étant connecté à un serveur de diffusion de données audio/vidéo numériques encryptées et à un serveur de licences, chaque unité du sous-réseau possède un module de sécurité incluant une clé personnelle du sous-réseau et une clé publique correspondant à une clé privée propre au serveur de licences, ladite méthode est caractérisée en ce qu'elle comprend les étapes suivantes:
- transmission de données encryptées formant un contenu par le serveur de diffusion au serveur de licence chargé d'attribuer un identifiant audit contenu,
- réception et décryption du contenu par la première unité multimédia du sous-réseau,
- re-encryption du contenu préalablement décrypté au moyen d'une clé aléatoire,
- formation d'un bloc d'autorisation comprenant au moins un bloc d'informations identifiant le contenu, un bloc de signature du serveur de licence et la clé aléatoire encryptée avec la clé personnelle du sous-réseau,
- transmission du contenu re-encrypté accompagné par le bloc d'autorisation à la seconde unité multimédia,
- vérification de l'authenticité du contenu au moyen du bloc d'information et du bloc de signature du serveur.
- extraction par la seconde unité multimédia de la clé aléatoire du bloc d'autorisation et décryption du contenu avec ladite clé aléatoire.

Le contenu transmis par le serveur de diffusion est identifié par le serveur de licences avec un identifiant ou bloc d'informations signé par ledit serveur. Ce contenu est ensuite transmis aux enregistreurs des sous-réseaux qui le décrypte et le re-encrypte avec une clé aléatoire avant de le stocker ou de le diffuser dans les sous-réseaux respectifs. Chaque enregistreur génère un bloc d'autorisation, parfois appelé "Keysafe", contenant au moins la clé aléatoire encryptée avec la clé propre au sous-réseau et un bloc d'informations identifiant le contenu signé par le serveur de licences. Ce bloc d'autorisation peut aussi inclure des données comme un numéro du module de sécurité, un code de type de contenu, un identifiant du canal de diffusion, la date courante, etc.

L'avantage de cette configuration en sous-réseaux est qu'un contenu peut être partagé avec d'autres sous-réseaux connectés aux mêmes serveurs de diffusion et de licences. Le serveur de licences étant connu par la signature du bloc d'informations identifiant le contenu, un autre sous-réseau peut requérir à ce serveur une conversion du bloc d'autorisation afin de permettre la décryption du contenu reçu.

### Brève description des figures

L'invention sera mieux comprise grâce à la description détaillée qui va suivre et qui se réfère aux figures annexées données à titre d'exemples nullement limitatifs.

La figure 1 illustre un schéma bloc d'un réseau domestique connecté à un serveur de diffusion comprenant un enregistreur de données audio/vidéo relié à un ensemble de décodeurs.

La figure 2 illustre un schéma bloc d'un réseau local comprenant un serveur de diffusion et un serveur de licences connecté à un ensemble de sous -réseaux comprenant un enregistreur de données audio/vidéo relié à un ensemble de décodeurs.

### Description détaillée de l'invention

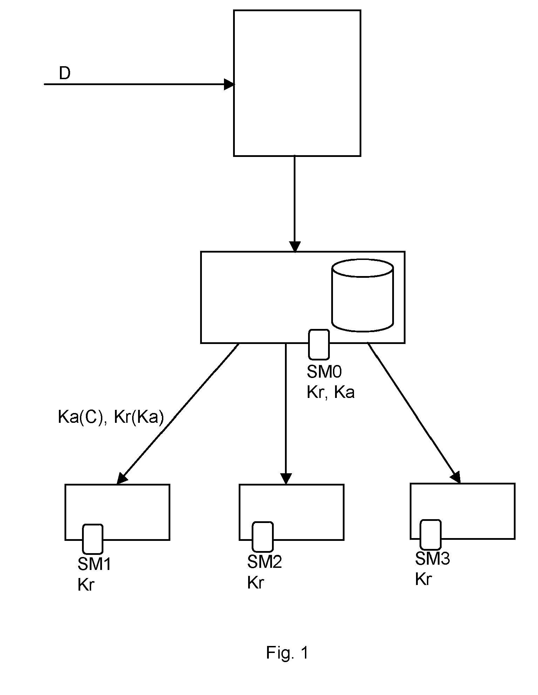

Le réseau domestique de la figure 1 comprend une unité multimédia principale, en l'occurrence un décodeur / enregistreur (DVR) de télévision numérique équipé d'un disque dur (HD) par exemple, connectée d'une part à un serveur de diffusion (SD) et d'autre part à une pluralité de décodeurs (STB1, STB2, STB3).

Le serveur de diffusion (SD), parfois appelé "Head End" reçoit des données D audio/vidéo numériques cryptées de diverses sources (câbles, satellites, antennes d'émission terrestres) et les prépare pour leur distribution dans des réseaux locaux en général câblés. Il joue également un rôle de centre de gestion contrôlant la diffusion des contenus (C) au moyen des messages de contrôle ECM et d'administration EMM insérés dans le flux des données audio/vidéo.

Toutes les unités du réseau domestique, ainsi que la principale, sont équipées de modules de sécurité (SM0, SM1, SM2, SM3) en général sous forme de cartes à puce amovibles.

Chaque module de sécurité appartenant à un même réseau domestique partage une clé de réseau Kr cryptographique permettant de lier un contenu (C) au réseau. Ainsi chaque unité du réseau peut accéder au contenu (C) pour autant qu'elle possède cette clé Kr.

Le contenu (C) diffusé par le serveur (SD) est décrypté d'une manière connue par le décodeur / enregistreur (DVR) au moyen des mots de contrôle (CW) extraits des messages de contrôle (ECM) en fonction des droits contenu dans son module de sécurité (SM0). Une fois décrypté le contenu (C) est immédiatement re-encrypté avec une clé aléatoire (Ka) fournie par le module de sécurité (SM0) puis soit stocké dans le disque dur (HD), soit diffusé directement aux unités (décodeurs) du réseau. Parallèlement un cryptogramme ou bloc d'autorisation Kr(Ka) est formé en encryptant la clé aléatoire Ka avec la clé de réseau Kr. Le contenu re-encrypté Ka(C) est transmis à un ou plusieurs décodeurs du réseau accompagné de ce bloc Kr(Ka) à partir duquel le module de sécurité associé extrait la clé aléatoire (Ka) à l'aide de la clé de réseau (Kr). Cette clé (Ka) permet la décryption du contenu par le ou les décodeurs en vue de sa restitution sur un téléviseur par exemple.

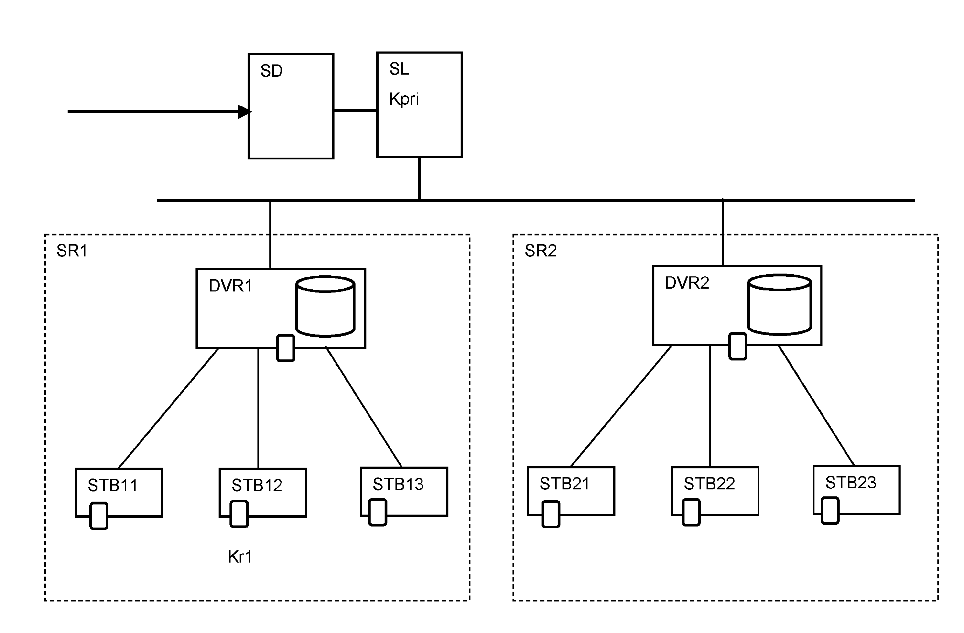

Le réseau local de la figure 2 comprend un ensemble de sous-réseaux (SR1, SR2) connecté à un serveur de diffusion (SD) et à un serveur de licences (SL). Chaque sous-réseau est composé d'au moins un décodeur / enregistreur (STB10, STB20) principal auquel est connectée une pluralité de décodeurs (STB11..., STB21...). Toutes les unités d'un sous-réseau (SR1, SR2) donné partagent une clé (Kr1, Kr2) propre audit sous-réseau contenue dans les modules de sécurités (SM10, SM11..., SM20, SM21...) respectifs. Le serveur de licences (SL), qui peut d'ailleurs être intégré dans le serveur de diffusion (SD), possède et gère toutes les clés des sous-réseaux qui y sont connectés. De plus, tous les modules de sécurité des unités membres de sous-réseaux dépendant d'un même serveur de licence (SL) possèdent une clé publique (Kpub) dudit serveur (SL).

Un contenu (C) est diffusé dans un sous-réseau (SR1, SR2) après décryption et re-encryption avec une clé aléatoire (Ka) générée par le module de sécurité de l'unité principale (STB10, STB20) comme dans le cas décrit plus haut. Par contre, le bloc d'autorisation [Kr1 (Ka), infoc, sign(infoC, Kpri)] contient en plus de la clé aléatoire (Ka) encryptée avec la clé du sous-réseau (Kr1), un bloc d'informations (infoC) identifiant le contenu (C) signé avec la clé privée (Kpri) du serveur de licence (SL). La signature sign(infoC, Kpri) du bloc d'information est constituée par un code d'authentification H(infoC) obtenu par exemple avec une fonction unidirectionnelle de hachage H exécutée sur ledit bloc et encrypté avec la clé privée (Kpri) du serveur de licence (SL). Elle peut aussi être constituée par un code d'authentification (MAC) Message Authenticaton Code généré avec une clé symétrique.

Cette signature sign(infoC, Kpri) permet au module de sécurité d'un décodeur du sous-réseau de vérifier l'authenticité du contenu par comparaison du code d'authentification reçu et décrypté au moyen de la clé publique (Kpub) du serveur (SL) avec le code d'authentification calculé à partir du bloc d'information (infoC) reçu.

Un contenu re-encrypté par un décodeur/enregistreur d'un sous-réseau (SR2) peut être mis à disposition d'un autre sous-réseau (SR1) appartenant au même réseau local. En effet, un utilisateur d'un sous réseau (SR1), informé par exemple au moyen d'une grille de programmes affichée sur son téléviseur peut sélectionner un contenu (C) disponible sur le sous-réseau (SR2). Ce contenu est reçu avec un bloc d'autorisation [Kr2(Ka), infoC, sign(infoC, Kpri)] dont il ne peut pas décrypter la clé aléatoire (Ka) car elle est encryptée avec la clé (Kr2) du sous-réseau d'origine (SR2).

Afin de permettre la décryption du contenu, le module de sécurité (SM11) du décodeur (STB11) nécessite un nouveau bloc d'autorisation de la part du serveur de licences. Le bloc d'autorisation [Kr2(Ka), infoC, sign(infoC, Kpri)] reçu est alors transmis au serveur de licence (SL) qui vérifie son authenticité au moyen du bloc d'information (infoC) et de sa signature sign(infoC, Kpri). Après une vérification réussie, le serveur (SL) transmet, en réponse, au décodeur (STB11) un bloc d'autorisation recomposé [Kr1 (Ka), infoC, sign(infoC, Kpri)] comprenant la clé aléatoire (Ka) encryptée avec la clé du sous-réseau concerné, ici Kr1, et le bloc d'information (infoC) signé par le serveur de licence (SL). Une vérification de l'authenticité du nouveau bloc reçu peut être effectuée de la manière décrite plus haut. Lorsque le bloc est considéré comme authentique, c'est-à-dire reconnu par le serveur de licences (SL), le module de sécurité (SM11) du décodeur (STB11) extrait la clé aléatoire (Ka) avec la clé (Kr1) correspondante du sous-réseau (SR1) et décrypte le contenu (C).

Afin d'identifier le sous-réseau ayant généré le bloc d'autorisation, celui-ci inclut un identifiant du sous-réseau concerné ainsi qu'une signature effectuée avec la clé du sous-réseau sur l'ensemble des données du bloc. Dans l'exemple, le bloc [Kr2(Ka), infoC, sign(infoC, Kpri)] se complète par l'identifiant IDSR2 du sous réseau ayant fourni le contenu, ce qui donne [Kr2(Ka), infoC, sign(infoC, Kpri), IDSR2, sign(B, Kr2)] où sign(B, Kr2) représente la signature avec la clé (Kr2) du sous-réseau (SR2) effectuée sur toutes les données (B) ou éléments (Kr2(Ka), infoC, sign(infoC, Kpri), IDSR2) du bloc précédant ladite signature. A la réception d'un tel bloc, le serveur de licences peut vérifier la signature car il possède la clé (Kr2) et génère le bloc d'autorisation [Kr1 (Ka), infoC, sign(infoC, Kpri), sign(B, Kpri)] nécessaire au décodeur (STB11) du sous-résau (SR1) ayant requis le contenu où sign(B, Kpri) représente la signature faite sur le bloc avec la clé privée (Kpri) du serveur (SL). L'origine du bloc est vérifiée par le module de sécurité (SM11) du décodeur (STB11) grâce à la signature sign(B, Kpri) qu'il décrypte avec la clé publique (Kpub) du serveur (SL) à disposition de toutes les unités du réseau local.

En principe, dans un bloc d'autorisation, les données secrètes telles que des clés d'encryption sont encryptées avec une clé secrète ou la clé publique du destinataire, tandis que des données ou blocs d'informations sont signés afin de permettre une vérification de leur authenticité après transmission et ceci avant la décryption d'une clé.

Un échec de la vérification est enregistré par le serveur et un message d'erreur peut être envoyé au sous-réseau concerné et signalé par l'un ou l'autre décodeur par l'affichage d'un message d'erreur sur l'écran du téléviseur par exemple.

Selon une réalisation préférée, les clés des sous-réseaux (Kr1, Kr2, ...) forment des paires de clés asymétriques (Kpubr1, Kprir1, Kpubr2, Kprir2,...). Les clés publiques (Kpubr1, Kpubr2,...) de chaque paire sont stockées dans le serveur de licences (SL) tandis que les clés privées (Kprir1, Kprir2,...) correspondantes sont stockées dans les modules de sécurité (SM10, SM11, SM12,..., SM20, SM21, SM22,...) des unités (DRV1, STB11, STB12,..., DRV2, STB21, STB22,...) respectives de chaque sous-réseau (SR1, SR2,...). Ainsi, dans les blocs d'autorisation accompagnent les contenus (C), la ou les clés aléatoires (Ka) sont encryptées avec la clé publique du sous-réseau où le contenu a été re-encrypté.

Lors de la transmission d'un contenu (C) d'un sous-réseau (SR2) à un autre sous-réseau (SR1), le bloc d'autorisation généré par le module de sécurité (SM21) décodeur (STB21) du sous-réseau (SR2) d'origine comprend les éléments suivants: la clé aléatoire (Ka) encryptée avec la clé publique (Kpubr2) du sous-réseau (SR2), Kpubr2(Ka), le bloc d'information (infoC) accompagné de sa signature avec la clé privée du serveur (infoC, sign(infoC, Kpri)), l'identifiant IDSR2 du sous-réseau (SR2), la clé aléatoire (Ka) encryptée avec la clé publique du serveur Kpub(Ka), et la signature sur l'ensemble de ces éléments sign(B, Kprir2) effectuée avec la clé privée du sous-réseau (SR2). Comme le serveur (SL) ne possède pas la clé privée (Kprir2) du sous-réseau (SR2), il ne peut pas décrypter la clé aléatoire (Ka) encryptée avec la clé publique (Kpubr2), alors le module de sécurité (SM21) fournit au serveur (SL) la clé aléatoire (Ka) encryptée avec sa clé publique (Kpub). Le serveur peut ainsi vérifier l'authenticité du bloc [Kpubr2(Ka), infoC, sign(infoC, Kpri), IDSR2, Kpub(Ka), sign(B, Kprir2)] grâce à la clé publique (Kpubr2) du sous-réseau (SR2) en sa possession. Après une vérification réussie, Il génère le bloc [Kpubr1 (Ka), infoC, sign(infoC, Kpri), sign(B, Kpri)] à destination du sous-réseau (SR1) ayant demandé le contenu (C) en utilisant sa clé privée (Kpri) pour décrypter la clé aléatoire (Ka), ladite clé étant ré-encryptée avec la clé publique (Kpubr1) du premier sous-réseau (SR1).

Le module de sécurité (SM11) du décodeur (STB11) de destination vérifie l'authenticité du bloc [Kpubr1 (Ka), infoC, sign(infoC, Kpri), sign(B, Kpri)] avec la clé publique Kpub du serveur (SL) et ensuite décrypte la clé aléatoire (Ka) avec la clé privée (Kprir1) du sous-réseau (SR1) correspondant à la clé publique (Kpubr1).

Selon une variante, la clé aléatoire (Ka) peut changer au cours d'une session de re-encryption que ce soit dans un réseau domestique comme illustré par la figure 1 ou dans un sous-réseau d'un réseau local comme dans la figure 2. Par exemple, le changement de clé peut s'effectuer en fonction du type de contenu, et/ou périodiquement pendant l'encryption d'un contenu donné et/ou encore en fonction d'un nombre de blocs encryptés du contenu. Par exemple, la clé change pour chaque type de contenu (sport, film, variétés, etc.), toutes les 5 minutes, ou encore tous les 1000 blocs encryptés. Dans ce cas, le bloc de contrôle transmis contient l'ensemble des clés utilisées pour l'encryption du contenu et/ou un algorithme permettant de les obtenir, cet ensemble ou algorithme étant encrypté avec la clé de réseau (Kr), respectivement de sous-réseau (Kr1, Kr2).

Selon une autre variante, le bloc d'autorisation peut également comprendre des conditions d'utilisation du contenu associé à ce bloc. Ces conditions, en général établies par le serveur de licence et de préférence signées par ce dernier, consistent par exemple en une date limite jusqu'à laquelle un contenu peut être restitué ou visualisé. Des limitations au niveau de l'exploitation du contenu par l'utilisateur comme par exemple les ports de sortie autorisés, le format autorisé, le nombre de visualisations ou les possibilités de faire une copie et le nombre de copies autorisé etc. peuvent également compléter les conditions. Des restrictions au niveau des possibilités de transmission du contenu à d'autres sous-réseaux du réseau local peuvent également être appliquées.

## Revendications

1. Méthode transmission de données numériques dans un réseau local comprenant des membres constitués par au moins une première unité multimédia (DVR) disposant de moyens de stockage (HD) de contenus (C) connecté à un serveur de diffusion (SD) de données audio/vidéo (D) numériques encryptées et à au moins une seconde unité multimédia (STB1, STB2, STB3) destinée à restituer le contenu (C), chaque membre possédant un module de sécurité (SM1, SM2, SM3) incluant une clé de réseau (Kr), ladite méthode est **caractérisée en ce qu'**elle comprend les étapes suivantes:
- réception et décryption par la première unité multimédia (DVR) de données encryptées formant un contenu (C) diffusé par le serveur de diffusion (SD),
- re-encryption du contenu (C) préalablement décrypté au moyen d'une clé aléatoire (Ka),
- transmission du contenu re-encrypté Ka(C) accompagné par un bloc d'autorisation Kr(Ka) comprenant la clé aléatoire (Ka) encryptée avec la clé de réseau (Kr) à la seconde unité multimédia (STB1, STB2, STB3),
- décryption par la seconde unité multimédia (STB1, STB2, STB3) du bloc d'autorisation Kr(Ka), extraction de la clé aléatoire (Ka) et décryption du contenu (C) avec ladite clé aléatoire (Ka).

2. Méthode selon la revendication 1 **caractérisée en ce que** la première unité multimédia (DVR) consistant en un décodeur/enregistreur de données audio/vidéo numériques stocke dans une mémoire de masse les données re-encryptée avec la clé aléatoire (Ka) et/ou les transmet à la seconde unité multimédia (STB1, STB2, STB3) consistant en un décodeur de télévision numérique.

3. Méthode selon la revendication 1 **caractérisée en ce que** la première unité multimédia (DVR) décrypte le contenu diffusé par le serveur (SD) au moyen de mots de contrôle (CW) issus de messages de contrôle (ECM) en fonction des droits contenus dans le module de sécurité (SM0) associé à ladite unité (DVR), ledit contenu décrypté étant immédiatement re-encrypté avec la clé aléatoire (Ka) générée par ledit module de sécurité (SM0) avant son stockage et/ou sa transmission vers la seconde unité (STB1, STB2, STB3).

4. Méthode transmission de données numériques dans un réseau local comprenant au moins un membre constitué par un sous-réseau (SR1, SR2) comprenant au moins une première unité multimédia (DVR1, DVR2) disposant de moyens de stockage (HD1, HD2) de contenus connectée à au moins une seconde unité multimédia (STB11,..., STB13, STB21,..., STB23) destinée à restituer le contenu (C), ledit sous-réseau (SR1, SR2) étant connecté à un serveur de diffusion (SD) de données audio/vidéo numériques encryptées et à un serveur de licences (SL), chaque unité du sous-réseau possède un module de sécurité (SM10,..., SM13, SM20,..., SM23) incluant une clé personnelle (Kr1, Kr2) du sous-réseau (SR1, SR2) et une clé publique (Kpub) correspondant à une clé privée (Kpri) propre au serveur de licences (SL), ladite méthode est **caractérisée en ce qu'**elle comprend les étapes suivantes:
- transmission de données encryptées formant un contenu (C) par le serveur de diffusion (SD) au serveur de licence (SL) chargé d'attribuer un identifiant audit contenu,
- réception et décryption du contenu (C) par la première unité multimédia (DVR1, DVR2) du sous-réseau (SR1, SR2),
- re-encryption du contenu (C) préalablement décrypté au moyen d'une clé aléatoire (Ka),
- formation d'un bloc d'autorisation [Kr1 (Ka), infoC, sign(infoC, Kpri)] comprenant au moins un bloc d'informations (infoC) identifiant le contenu (C), un bloc de signature sign(infoC, Kpri) du serveur de licence (SL) et la clé aléatoire (Ka) encryptée avec la clé personnelle (Kr1) du sous-réseau,
- transmission du contenu re-encrypté Ka(C) accompagné par le bloc d'autorisation [Kr1 (Ka), infoC, sign(infoC, Kpri)] à la seconde unité multimédia,
- vérification de l'authenticité du contenu au moyen du bloc d'information (infoC) et du bloc de signature sign(infoC, Kpri) du serveur (SL).
- extraction par la seconde unité multimédia de la clé aléatoire (Ka) du bloc d'autorisation [Kr1(Ka), infoC, sign(infoC, Kpri)] et décryption du contenu (C) avec ladite clé aléatoire (Ka).

5. Méthode selon la revendication 4 **caractérisée en ce que** la première unité multimédia (DVR1, DVR2) d'un sous-réseau (SR1, SR2) consistant en un décodeur/enregistreur de données audio/vidéo numériques stocke dans une mémoire de masse les données re-encryptées avec la clé aléatoire (Ka) et/ou les transmet à la seconde unité multimédia (STB11,..., STB13, STB21,..., STB23) consistant en un décodeur de télévision numérique.

6. . Méthode selon la revendication 4 **caractérisée en ce que** la première unité multimédia (DVR1, DVR2) d'un sous-réseau décrypte le contenu diffusé par le serveur au moyen de mots de contrôle CW issus de messages de contrôle ECM en fonction des droits contenus dans le module de sécurité (SM10, SM20) associé à ladite unité (DVR1, DVR2), ledit contenu décrypté étant immédiatement re-encrypté avec la clé aléatoire (Ka) générée par ledit module de sécurité (SM10, SM20) avant son stockage et/ou sa transmission vers la seconde unité.

7. Méthode selon la revendication 4 **caractérisée en ce que** le bloc de signature sign(infoC, Kpri) du serveur (SL) est formé d'un code d'authentification calculé à partir du bloc d'information (infoC), ledit code étant encrypté avec la clé privée (Kpri) du serveur de licences (SL).

8. Méthode selon les revendications 4 à 7 **caractérisée en ce que** le module de sécurité vérifie l'authenticité du contenu (C) avec le bloc de signature sign(infoC, Kpri) du serveur (SL), en comparant le code d'authentification reçu et décrypté au moyen de la clé publique (Kpub) du serveur avec le code d'authentification calculé à partir du bloc d'information (infoC) reçu.

9. Méthode selon la revendication 4 **caractérisée en ce qu'**un contenu (C) est mis à disposition d'une unité (STB11) d'un premier sous-réseau (SR1) par un second sous-réseau (SR2) dépendant d'un même serveur de licence (SL) selon les étapes suivantes:
- envoi du bloc d'autorisation [Kr2(Ka), infoC, sign(infoC, Kpri), IDSR2, sign(B, Kr2)] reçu du second sous-réseau (SR2) au serveur de licences (SL) à partir de l'unité (STB11) du premier sous-réseau (SR1),
- vérification de l'authenticité du bloc d'autorisation [Kr2(Ka), infoC, sign(infoC, Kpri), IDSR2, sign(B, Kr2)] par le serveur de licence (SL) au moyen de la signature sign(B, Kr2) effectuée sur toutes les données (B) dudit bloc précédant ladite signature sign(B, Kr2) en utilisant la clé (Kr2),
- en cas de réussite de la vérification, génération et transmission à l'unité (STB11) du premier sous-réseau (SR1) d'un nouveau bloc d'autorisation [Kr1 (Ka), infoC sign(infoC, Kpri), sign(B, Kpri)] comprenant au moins la clé aléatoire (Ka) d'encryption du contenu (C) encryptée avec la clé (Kr1) du premier sous-réseau (SR1).
- vérification de l'authenticité du nouveau bloc d'autorisation [Kr1(Ka), infoC sign(infoC, Kpri), sign(B, Kpri)] reçu et décryption du contenu (C) avec la clé aléatoire (Ka) extraite dudit bloc par le module de sécurité (SM11) de l'unité (STB11) avec la clé (Kr1) du sous-réseau (SR1).

10. Méthode selon les revendications 4 à 9 **caractérisée en ce que** les clés (Kr1, Kr2, ...) personnelles de chaque sous-réseau (SR1, SR2, ...) forment des paires de clés asymétriques (Kpubr1, Kprir1, Kpubr2, Kprir2), les clés publiques (Kpubr1, Kpubr2) de chaque paire étant stockées dans le serveur de licences (SL) tandis que les clés privées (Kprir1, Kprir2) correspondantes sont stockées dans les modules de sécurité (SM10, SM11, SM12,..., SM20, SM21, SM22,...) des unités (DRV1, STB11, STB12,..., DRV2, STB21, STB22,...) respectives de chaque sous-réseau (SR1, SR2, ...).

11. Méthode selon les revendications 9 et 10 **caractérisée en ce que** le bloc d'autorisation [Kpubr2(Ka), infoC, sign(infoC, Kpri), IDSR2, Kpub(Ka), sign(B, Kprir2)] provenant du second sous-réseau (SR2) comprend au moins la clé aléatoire (Ka) encryptée avec la clé publique (Kpub) du serveur de licences (SL) et un identifiant (IDSR2) du sous réseau (SR2) dans lequel ledit bloc a été généré.

12. Méthode selon les revendications 9 à 11 **caractérisée en ce que** le serveur de licence (SL) vérifie l'authenticité du bloc d'autorisation [Kpubr2(Ka), infoC, sign(infoC, Kpri), IDSR2, Kpub(Ka), sign(B, Kprir2)] au moyen de la signature sign(B, Kprir2) effectuée sur les données dudit bloc en utilisant la clé publique (Kpubr2) du second sous-réseau (SR2) en sa possession et génère un nouveau bloc d'autorisation [Kpubr1(Ka), infoC, sign(infoC, Kpri), sign(B, Kpri)] à destination du premier sous-réseau (SR1) en utilisant sa clé privée (Kpri) pour décrypter la clé aléatoire (Ka), ladite clé étant ré-encryptée avec la clé publique (Kpubr1) du premier sous-réseau (SR1).

13. Méthode selon les revendications 9 à 12 **caractérisée en ce que** le module de sécurité (SM11) de l'unité (STB11) de destination vérifie l'authenticité du bloc [Kpubr1 (Ka), infoC, sign(infoC, Kpri), sign(B, Kpri)] reçu avec la clé publique Kpub du serveur (SL) et ensuite décrypte la clé aléatoire (Ka) avec la clé privée (Kprir1) du premier sous-réseau (SR1) correspondant à la clé publique (Kpubr1).

14. Méthode selon les revendications 1 à 13 **caractérisée en ce que** la clé aléatoire (Ka) change en fonction du contenu et/ou périodiquement dans le temps et/ou en fonction du nombre de blocs de données encryptés.

15. Méthode selon la revendication 1 à 14 **caractérisée en ce que** le bloc d'autorisation comprend l'ensemble des clés aléatoire utilisées pour l'encryption du contenu et/ou un algorithme permettant d'obtenir lesdites clés, cet ensemble et/ou algorithme étant encrypté avec la clé de réseau ou de sous-réseau.

16. Méthode selon les revendications 4 à 15 **caractérisée en ce que** le bloc d'autorisation comprend des conditions d'utilisation du contenu associé à ce bloc, lesdites conditions étant établies et signées par le serveur de licences.

17. Méthode selon la revendication 16, **caractérisée en ce que** les conditions consistent en une date limite jusqu'à laquelle un contenu peut être utilisé et/ou à des limitations au niveau des possibilités d'exploitation dudit contenu par un utilisateur et/ou au niveau des possibilités de transmission dudit contenu à d'autres sous-réseaux du réseau local.
